# EUROPEAN PATENT SPECIFICATION

(11) **EP 3 109 007 B1**
(45) Date of publication and mention of the grant of the patent: **12.02.2020**
(21) Application number: 16175913.9
(22) Date of filing: 23.06.2016
(51) Int. Cl.: B25F 5/00

(54) **SECURITY LOCK-OUT FOR POWER TOOLS**
SICHERHEITSAUSSPERRUNG FÜR ELEKTROWERKZEUGE
DISPOSITIF DE VERROUILLAGE DE SÉCURITÉ POUR OUTILS ÉLECTRIQUES

(30) Priority: 25.06.2015 US 201514750929
(43) Date of publication of application: 28.12.2016
(73) Proprietor: Ingersoll-Rand Company, Davidson, NC 28036 (US)
(72) Inventor: Crescenti, Aaron Michael, Glen Gardner, NJ New Jersey 08826 (US)
(74) Representative: Haseltine Lake Kempner LLP

(56) References cited:
- EP-A2- 1 690 648
- WO-A1-2013/116303
- CA-A1- 2 283 552
- JP-A- 2009 083 030
- US-A1- 2003 107 470
- US-A1- 2009 200 053
- US-B1- 6 536 536

## Description

### BACKGROUND

### Technical Field

The present disclosure relates to power tools. More particularly, the disclosure relates to lock-out features for enhanced security of power tools.

### State of the Art

Power tools are utilized in many industries to provide a mechanical advantage to their users. These power-driven tools provide force, torque, and/or impact not otherwise achievable under man power alone. Moreover, many of these tools are designed to be hand-portable and battery-driven, making them ever more useful over an increasingly wider range of applications. Examples are known from US2009200053A1 and CA2283552A1.

It is the portability of these tools that has generated a need to prevent unapproved access to or operation of the tool, regardless of the tool's location. Access to these tools combined with the portability of the same provides an easy opportunity for theft. For example, on a job site, handheld power tools are frequently operated in locations where there is lots of foot traffic. Moreover, to avoid the inefficiencies in constantly having to gather up and lock away the power tools any time they leave the job site, workers often leave the power tool right on the job. This creates opportunity for the tool to "walk away" and never return. But, losing one or more of these tools to theft would represent a substantial loss to the tool owner as well as any losses resulting from the inability to work due to the tool's absence.

It is also desirable to prevent unauthorized use of the power tools, as this may expose an individual to unsafe and risky conditions. Inexperienced or untrained individuals could attempt, in many cases out of sheer curiosity, to operate the tool. But, without proper training or experience, the very operation of the tool itself could endanger the user or others in close proximity. For example, saws, drills and impact wrenches, just to name a few, can exert a kick or jerk when operated, which can cause the inexperienced or unassuming user to unexpectedly drop, move, or mishandle the handheld power tool.

There is thus a need to develop measures to prevent or deter the theft and/or unauthorized use of power tools.

### SUMMARY

The present disclosure relates to power tools, and, in particular, to lock-out features for the enhanced security of power tools.

The invention according to claim 1, consists of a power tool comprising: a rotatable tool holder configured to receive a bit; a motor adapted to drive the rotation of the tool holder; a housing containing at least the motor and a handle extending therefrom configured to be gripped to manipulate the tool; a power source detachably coupled to the handle and configured to deliver power to the motor; an actuator configured to be actuated to select powered operation of the tool; an input device configured to receive an input parameter; and a control unit configured to store a predetermined value and evaluate whether or not the input parameter matches the predetermined value and to permit powered operation of the tool when the input parameter matches the predetermined value and prohibit powered operation of the tool when the input parameter does not match the predetermined value, wherein the input device is one of - a series of independently rotatable discs each having a range of numerals on an exterior surface thereof or - an input device comprising a ring-shaped dial and a digital display, the digital display configured within the ring-shaped dial on a rear face of the housing, the dial being adapted to rotate with respect to the digital display, the rotation of the dial being configured to input the input parameter.

Another aspect of the present disclosure includes wherein the dial is configured to rotate in opposing directions and wherein the rotation of the dial in either direction scrolls through a range of input parameters.

Another aspect of the present disclosure includes wherein changing the rotation direction of the dial registers to the control unit the input parameter displayed on the display when the rotation direction was changed.

Another aspect of the present disclosure includes wherein the dial further comprises one or more raised partitions thereon.

Another aspect of the present disclosure includes wherein each of the raised partitions corresponds to a successive numerical value within a range of input parameters.

Another aspect of the present disclosure includes wherein the dial may be axially moved toward the housing to register in the control unit the input parameter displayed on the display.

Another aspect of the present disclosure includes wherein the input parameter is a combination of a numerical value and a direction of rotation used to arrive at the numerical value.

Another aspect of the present disclosure includes wherein the predetermined value is a series of numerical values having an assigned rotational direction associated therewith, and wherein the control unit compares both the numerical value and the direction of rotation of the input parameter and the predetermined value.

Another aspect of the present disclosure includes a power tool comprising a rotatable tool holder configured to receive a bit, a motor adapted to drive the rotation of the tool holder, a housing containing at least the motor and a handle extending therefrom configured to be gripped to manipulate the tool, a power source detachably coupled to the handle and configured to deliver power to the motor, an actuator configured to be actuated to select powered operation of the tool, an input device configured to receive an input parameter, and a control unit configured to store a predetermined value and evaluate whether or not the input parameter matches the predetermined value and to permit powered operation of the tool when the input parameter matches the predetermined value and prohibit powered operation of the tool when the input parameter does not match the predetermined value.

Another aspect of the present disclosure includes wherein the power source is a rechargeable battery configured to detachably couple to the handle and deliver electric power to the motor.

Another aspect of the present disclosure includes wherein the input device is configured on a rear face in a back end of the housing.

Another aspect of the present disclosure includes wherein the power source is pneumatic.

Another aspect of the present disclosure includes wherein the rotatable discs collectively prevent the actuation of the actuator unless the input parameters shown on the rotatable discs match the setting.

Another aspect of the present disclosure includes wherein the rotatable discs physically prevent the actuation of the actuator.

The foregoing and other features, advantages, and construction of the present disclosure will be more readily apparent and fully appreciated from the following more detailed description of the particular embodiments, taken in conjunction with the accompanying drawings.

### BRIEF DESCRIPTION OF THE DRAWINGS

Some of the embodiments will be described in detail, with reference to the following figures, wherein like designations denote like members:
FIG. 1 is a side perspective view of an illustrative embodiment of a lockout device on a power tool in accordance with the present disclosure.
FIG. 2 is a schematic view of an illustrative embodiment of a lockout device on a power tool in accordance with the present disclosure
FIG. 3 is a side perspective view of an illustrative embodiment of a lockout device on a power tool in accordance with the present disclosure.
FIG. 4 is side perspective view of an illustrative embodiment of a lockout device on a power tool in accordance with the present disclosure.
FIG. 5 is side perspective view of an illustrative embodiment of a lockout device on a power tool in accordance with the present disclosure.
FIG. 6 is a schematic view of an illustrative embodiment of a lockout device on a power tool in accordance with the present disclosure.

### DETAILED DESCRIPTION OF EMBODIMENTS

A detailed description of the hereinafter described embodiments of the disclosed apparatus and method are presented herein by way of exemplification and not limitation with reference to the Figures listed above. Although certain embodiments are shown and described in detail, it should be understood that various changes and modifications may be made without departing from the scope of the appended claims.

The scope of the present disclosure will in no way be limited to the number of constituting components, the materials thereof, the shapes thereof, the relative arrangement thereof, etc., and are disclosed simply as an example of embodiments of the present disclosure.

As a preface to the detailed description, it should be noted that, as used in this specification and the appended claims, the singular forms "a", "an" and "the" include plural referents, unless the context clearly dictates otherwise.

The drawings depict illustrative embodiments of a handheld power tool 10. These embodiments may each comprise various structural and functional components that complement one another to provide the unique functionality and performance of the power tool 10, the particular structure and function of which will be described in greater detail herein.

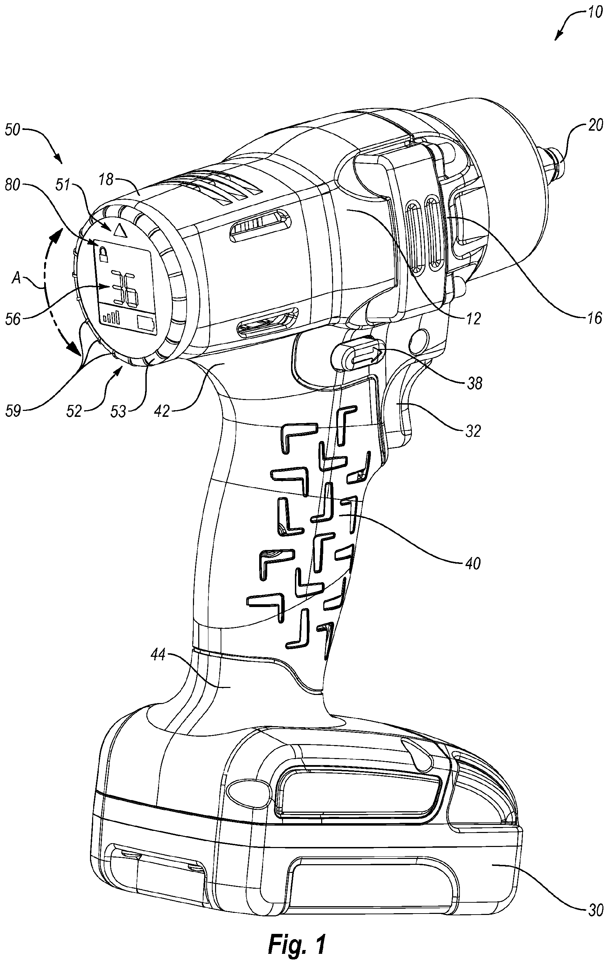

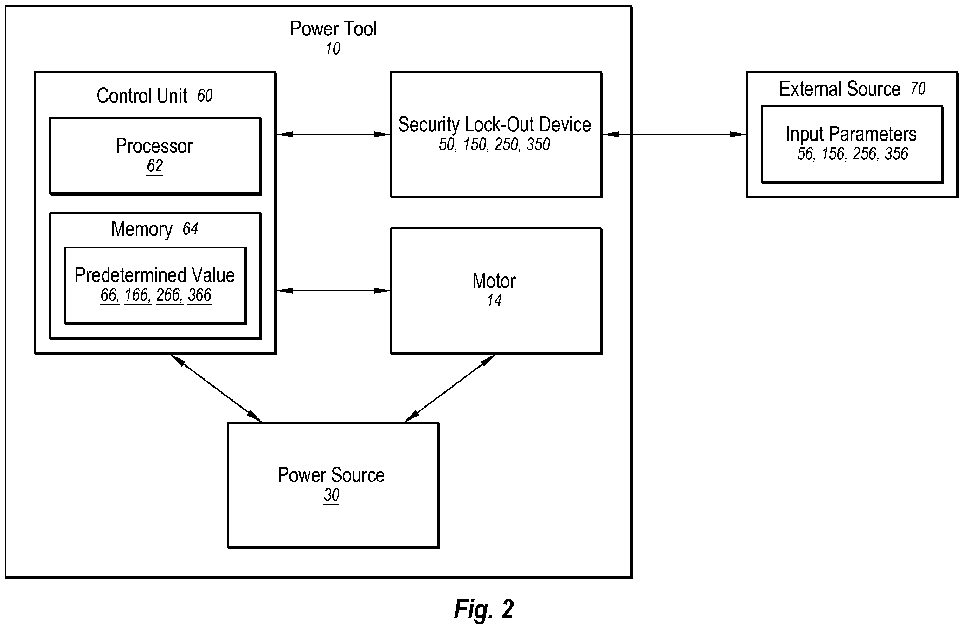

Referring to the drawings, FIGS. 1 and 2 depict an illustrative embodiment of a power tool 10. Embodiments of the power tool 10 may comprise a housing 12 that encloses a source of motion, such as, for example, a motor 14. The housing 12 may comprise a front end 16 and a back end 18. Coupled to the front end 18 of the housing 12 may be a working end of the power tool 10 in the form of a tool holder 20 for retaining a work element (not shown) (e.g., drill bit, screw driving bit, hex-shanked driver bit, hole saws, rotary sanders, wire-wheel brushes, and other accessories adapted to operate via motorized input). Embodiments of the power tool 10 may comprise the motor 14 being configured to drive the tool holder 20 in a rotary motion. Embodiments of the power tool 10 may alternatively comprise the motor 14 being configured to drive the tool holder 20 in a back-and-forth linear motion, such as for a reciprocating saw.

Embodiments of the power tool 10 may comprise a power source 30 that provides power to the motor 14. The power source 30 may be configured to be detachably coupled to the power tool 10. For example, the power source 30 may be a portable and/or rechargeable power source, such as, for example, a rechargeable battery that may be configured to physically couple to the power tool 10 at a handle 40 that extends outwardly from the housing 12. Specifically, the handle 40 may have a first end 42 and a second end 44, the first end 42 being coupled to the housing 12 and the second end 44 being configured to have detachably coupled thereto the power source 30. In this way, the battery may electrically drive the motor 14. Alternatively, the power source 30 may be a pneumatic power source, such as, for example, a compressor hose that may be operatively coupled on one end to the second end 44 of the handle and on the other end to a high pressure, compressed fluid source (e.g., air compressor) (not shown). In this way, the compressed fluid may pneumatically drive the motor 14.

Embodiments of the power tool 10 may comprise an actuator 32 that may operatively and selectively couple the power source 30 to the motor 14. The actuator 32 may be configured to activate a switch 34 (not depicted) for selectively actuating the motor 14 by providing or restricting power thereto, as the case may be. For example, actuating the actuator 32 from a resting state to an engaged state may operatively couple the power source 30 to the motor 14, and releasing the actuator 32 from the engaged state to the resting state may decouple the power source 30 from the motor 14. Embodiments of the power tool 10 may further comprise a reversing switch 38 that selectively reverses a direction in which the motor drives the tool holder (i.e., clockwise versus counter-clockwise). As depicted, the power tool 10 may be a battery-powered, cordless impact drill. However, the power tool 10 may be any type of corded, cordless, pneumatic, electric, or combustion powered tool, such as a screwdriver, an impact driver or wrench, a hammer, a hammer drill, a nailer, a stapler, a saw, a grinder, a sander, a router, and/or a flashlight.

Embodiments of the power tool 10 may comprise a security lock-out device 50 configured on or near the back end 18 of the housing 12. Alternatively, the security lock-out device 50 may be configured on another portion of the housing 12, such as, for example, on a side surface, top surface, etc. The security lock-out device 50 may comprise one or more input devices 52 configured to receive one or more input parameters 56. The input parameters 56 may be provided to the power tool 10 by an external source 70. The external source 70 may be, for example, a user of the power tool 10, or, alternatively, the external source 70 may be an external input device (not depicted) capable of electronic communication with the security lock-out device 50 and/or the power tool 10. For example, the external source 70 may be a user that utilizes or operates the one or more input devices 52 to input, or otherwise communicate, the one or more input parameters 56 to the security lock-out device 50 and/or the power tool 10.

Embodiments of the power tool 10 may comprise the security lock-out device 50 further comprising a display 80. The display 80 may include any device which can be perceived by the external source 70 and is capable of visually communicating information from the security lock-out device 50 or the power tool 10 to the external source 70, such as an operator or user. The display 80 may be, for example, a liquid crystal display (LCD), a light-emitting diode (LED) display, including an organic LED (OLED) display, or an organic electroluminescent (EL) display. Moreover, embodiments of the display 80 may be configured as a touch pad that enables the display 80 to operate not only as a visual display but also as the input device 52 to permit the external source 70 to input the one or more input parameters 56 into the security lock-out device 50 and/or the power tool 10.

Embodiments of the power tool 10 may comprise the display 80 being part of the power tool 10 but nevertheless configured to be in operational communication with the security lock-out device 50. The display 80, whether integral with the security lock-out device 50 or as a separate component of the power tool 10 in operational communication with the security lock-out device 50 may be configured or adapted to display any of the information that was described above or below, such as but not limited to, input parameters 56, operation modes, locked or unlocked modes, remaining battery capacity, number of additional power tool operations that may be performed in view of the remaining battery capacity, tool identification information, current limit threshold, battery discharge threshold, etc.

Embodiments of the power tool 10 may further comprise a control unit 60 in electrical and operational communication with at least some components of the power tool 10. The control unit 60 may comprise at least one processor 62 (e.g., a microprocessor or microcontroller), which may be configured to operate according to instructions, algorithms, or program code and data stored in the memory 64. The memory 64 may comprise non-volatile, read-only memory (ROM) and/or rewriteable memory, such as one or more EEPROMs and flash memory or mechanically addressable memory, such as a hard drive. The memory 64 may also include volatile memory, such as RAM, DRAM and SRAM. The memory 64 may be configured to store one or more predetermined values 66, such as, for example, numbers, figures, sets of numbers and/or figures, sequences of numbers and/or figures, and/or other similar data.

Embodiments of the power tool 10 may further comprise the control unit 60 being configured to permit or restrict some of the general operational aspects of the power tool 10. For example, the control unit 60 may be configured to sense the state of the actuator 32, such that under the condition the actuator 32 is transitioned from the resting state to the engaged state the control unit 60 permits the motor 14 to operate by drawing power from the power source 30, and such that under the condition the actuator 32 is released from the engaged state to the resting state the control unit 60 instructs the motor 14 to halt by disengaging the motor 14 from the power source 30. For example, when an operator depresses the actuator 32, the control unit 60 instructs the power source 30 to provide power to the motor 14 and when the operator releases the actuator 32, the control unit 60 instructs the power source 30 to cut power to the motor 14.

Embodiments of the power tool 10 may further comprise the control unit 60 being configured in electrical and operational communication with the security lock-out device 50. The control unit 60 may be coupled electronically to the security lock-out device 50 such that the input parameters 56, input to the lock-out device 50 via the input device 52, are communicated to the control unit 60. The control unit 60 may evaluate the input parameters 56, compare the input parameters 56 with the predetermined values 66 stored in the memory 64, and control the power tool 10 in accordance with the instructions, algorithms, or program code and data stored in the memory 64. For example, the instructions, algorithms, or program code in the memory 64 may alter the operational aspects of the power tool 10 dependent upon whether or not the input parameters 56 match the predetermined values 66. For example, if the input parameters 56 match the predetermined values 66, the control unit 60 may place the power tool 10 in an operative state that permits the power tool 10 to operate under normal operating conditions described above. On the other hand, if the input parameters 56 do not match the predetermined values 66, the control unit 60 may place the power tool 10 in a locked-out state that prevents the power tool 10 from operating under normal operating conditions. Indeed, if the input parameters 56 do not match the predetermined values, the control unit 60 may lock the power tool 10 to prohibit power being delivered from the power source 30 to the motor 14, which prevents the power tool 10 from operating, regardless of whether or not the actuator 32 is in the resting state or engaged state.

Embodiments of the power tool 10 may comprise the embodiment of the security lock-out device 50, illustratively depicted in FIG. 1. As shown, the security lock-out device 50 may be coupled to the housing 12 at the back end 18 of the housing 12. Alternatively, the security lock-out device 50 may be configured on or integrated into a rear face 19 on the back end 18 of the housing 12. The security lock-out device 50 may comprise the input device 52 and the display 80. The input device 52 may be a functional dial 53 that is configured to rotate with respect to the housing 12. The functional dial 53 may be shaped as a ring and configured to rotate in either a clockwise or counter clockwise direction, as indicated by arrow A. The functional dial 53 may be configured to rotate about the display 80. Or, stated another way, the display 80 may be configured on the rear face 19 of the housing 12 in the middle of the ring-shaped functional dial 53. The display 80 may remain fixed with respect to the housing 12, while the functional dial 53 may be configured to rotate, as previously mentioned. The rotation of the functional dial 53 may be configured to manipulate, or otherwise scroll through, a series or range of numbers displayed on the display 80. The series or range of numbers may be previously stored in the memory 64 and displayed on the display 80. Rotation of the functional dial 53 in either direction may scroll through the range, and if the rotation of the dial in a particular direction reaches the end of the range, continued rotation of the dial in the particular direction may start the range over from the beginning. In like manner, if rotation of the dial in another direction reaches the beginning of the range, continued rotation of the dial in the another direction may start the range over from the top. For example, rotating the functional dial 53 in a clockwise direction may increase the value of the number displayed on the display 80 and rotating the functional dial 53 in a counterclockwise direction may decrease the value of the number displayed on the display 80, or vice versa. The number displayed on the display 80 may correspond to the input parameter 56. As such, an operator, functioning as the external source 70, may input the input parameter 56 to the security lock-out device 50 by rotating the functional dial 53 in a clockwise or counterclockwise manner to change the input parameter 56 displayed on the display 80 until the input parameter 56 matches the predetermined value 66 to thereby place the power tool 10 in the operative state. On the other hand, if the operator, functioning as the external source 70, inputs the input parameter 56 to the security lock-out device 50 via the functional dial 53 and the input parameter 56 does not match the predetermined value 66, then the control unit 60 operates to place the power tool 10 in the locked-out state, wherein the power tool 10 does not operate. The predetermined value 66 may be any predetermined quantity of a series of values and/or numerals that are set in a fixed sequence in the memory 64 of the control unit 60. The external source 70, such as, for example, an operator/user, may thereafter attempt to enter the input parameters 56 to match the predetermined value 66. For example, the operator may rotate the functional dial in a first direction (i.e., clockwise or counterclockwise) to reach a first input parameter (i.e., first value) in the fixed sequence of values of the predetermined value 66. The operator may thereafter rotate the functional dial 53 in a second direction opposite the first direction to reach a second input parameter (i.e., second value) in the fixed sequence of values of the predetermined value 66. The operator may thereafter rotate the functional dial 53 again in the first direction opposite the second direction to reach a third input parameter (i.e., third value) in the fixed sequence of values of the predetermined value 66. The operator may thereafter rotate the functional dial 53 again in the second direction opposite the first direction to reach a fourth input parameter (i.e., fourth value) in the fixed sequence of values of the predetermined value 66, and so on and so forth until the external source 70, the operator in many embodiments, has entered into the security lock-out device 50 the desired number of input parameters 56 to attempt to match the predetermined value 66. Once entered, the control unit 60 then compares the input parameters 56 against the predetermined value 66 and either: (1) permits the power tool 10 to function in the operative state (i.e., the motor 14 operates by drawing electric power from the power source 30) because the input parameters 56 match the predetermined value 66; or (2) places the power tool 10 in the locked-out state (i.e., the motor 14 receives no electric power from the power source 30) because the input parameters 56 did not match the predetermined value 66. In this way, access to the power tool 10 is controlled. For example, only those external sources 70 that are authorized to use the power tool 10 for its intended purpose are provided the predetermined value 66, such that only those external sources 70 that can enter the correct input parameters 56 to match the predetermined value 66 are allowed to use the power tool 10 for its intended purpose. As a result, the security lock-out device 50 of FIG. 1 serves to deter theft and unauthorized use of the power tool 10.

Further to the embodiment of the power tool 10 having the security lock-out device 50 of FIG. 1, a positional indicator 51 may be provided proximate the functional dial 53 on the housing 12, the display 80, or the frame of the display 80. The positional indicator 51 may be an icon, mark, spot, pointer, or other indicia of position that can indicate to the external source 70, such as an operator/user, the location of the functional dial 53 that corresponds with the number displayed on the display 80. Moreover, as an added security measure, the direction of rotation of the functional dial 53 may also be incorporated into the predetermined value 66, such that not only does the external source 70 have to match the input parameters 56 to the predetermined value 66 in the proper sequence but also in the proper direction of rotation. In this regard, the control unit 60 may be able to record the input of the input parameter 56 as the numeric value displayed on the display 80 at the moment the functional dial 53 changes directions. Alternatively, the control unit 60 may record the input of the input parameter 56 upon the pressing of an input button 57 (not depicted). With the use of the input button 57, input parameters 56 may be entered into the security lock-out device 50 without having to change directions of rotation on the functional dial 53. Thus, the predetermined value 66 may have sequential numbers that are arrived at by rotating the functional dial 53 in the same direction, without having to change directions. As a result, any quantity of number and rotational direction combinations may be utilized to establish and set the predetermined value 66 in the memory 64 of the control unit 60. Additionally, in some embodiments, the input button 57 may be configured as the functional dial 53 itself. For example, to act as the input button 57, the functional dial 53 may be configured to be pressed against or into the housing 12 in an axial direction (i.e., along the axis of rotation of the dial 53), much like a push button input or function button, to register the selection of the input parameter 56 in the control unit 60.

Further still to the embodiment of the power tool 10 having the security lock-out device 50 of FIG. 1, the functional dial 53 may have one or more raised partitions 59 thereon to provide a gripping surface for rotating the dial 53. The functional dial 53 may further comprise the raised partitions 59 being configured to correspond to each successive numeral displayed on the display 80 as the dial 53 is rotated. The functional dial 53 may also provide tactile or auditory feedback as the dial 53 is rotated to successive numbers. The functional dial 53 may also comprise sequential numerals written or otherwise inscripted (not depicted) about the outer face of the dial 53 to correspond to the numbers displayed on the display 80 as the dial 53 is rotated.

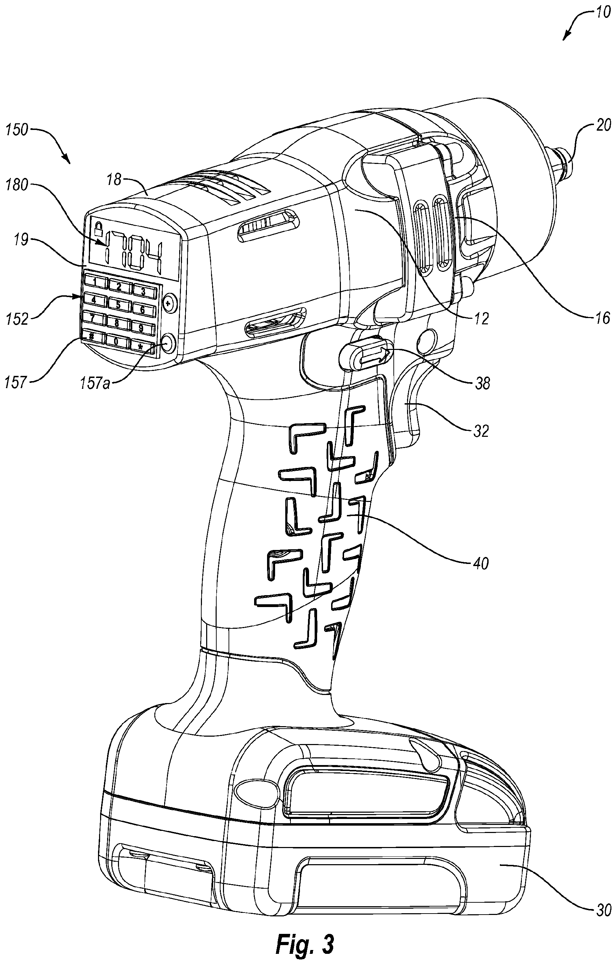

Embodiments of the power tool 10 may comprise the embodiment of the security lock-out device 150, illustratively depicted in FIG. 3. As shown, the security lock-out device 150 may be coupled to the housing 12 at the back end 18 of the housing 12. Alternatively, the security lock-out device 150 may be configured on or integrated into a rear face 19 of the back end 18 of the housing 12. The security lock-out device 150 may comprise the input device 152 and the display 180. The input device 152 may be a one or more input buttons 157 that are configured to be pressed to enter numeric values into the security lock-out device 150. As the input buttons 157 are pressed, the corresponding numeric value may be displayed on the display 180. The number displayed on the display 180 may correspond to the input parameter 156 desired to be input by the user. As such, an operator, functioning as the external source 70, may input the input parameter 156 to the security lock-out device 150 by pressing the input buttons 157 to attempt to match the predetermined value 166 to thereby place the power tool 10 in the operative state. On the other hand, if the operator, functioning as the external source 70, inputs the input parameter 156 to the security lock-out device 150 via the input buttons 157 and the input parameter 156 does not match the predetermined value 166, then the control unit 60 operates to place the power tool 10 in the locked-out state, wherein the power tool 10 does not operate. The predetermined value 166 may be any predetermined quantity of a series of values and/or numerals that are set in a fixed sequence in the memory 64 of the control unit 60. The predetermined value 166 may be a series or string of single-digit values, a series or string of double-digit values, or a series or string of any combination of values that can be previously stored in the memory 64 of the control unit 60. For example, the user may enter a first input parameter 156 to match the predetermined value 166, or the user may enter a series of input parameters 156 to match the predetermined value 166, as the case may be. As depicted in FIG. 3, the input buttons 157 may be a keypad having numerals 1-9 in sequential order. The user may use the input buttons 157 to select the input parameters 156 and have the selected input parameters 156 displayed on the display 180. The user may thereafter actuate the function button 157a, or push button input, to register the selected input parameters 156 in the control unit 60. If necessary, the user may repeat this process until the desired number of input parameters 156 have been registered to the control unit 60 to attempt to match the predetermined value 166. Once the selected input parameters 156 have been entered, the control unit 60 compares the input parameters 156 against the predetermined value 166 and either: (1) permits the power tool 10 to function in the operative state (i.e., the motor 14 operates by drawing electric power from the power source 30) because the input parameters 156 match the predetermined value 166; or (2) places the power tool 10 in the locked-out state (i.e., the motor 14 receives no electric power from the power source 30) because the input parameters 156 did not match the predetermined value 166. In this way, access to the power tool 10 is controlled. For example, only those external sources 70 that are authorized to use the power tool 10 for its intended purpose are provided the predetermined value 166, such that only those external sources 70 that can enter the correct input parameters 156 to match the predetermined value 166 are allowed to use the power tool 10 for its intended purpose. As a result, the security lock-out device 150 of FIG. 3 serves to deter theft and unauthorized use of the power tool 10.

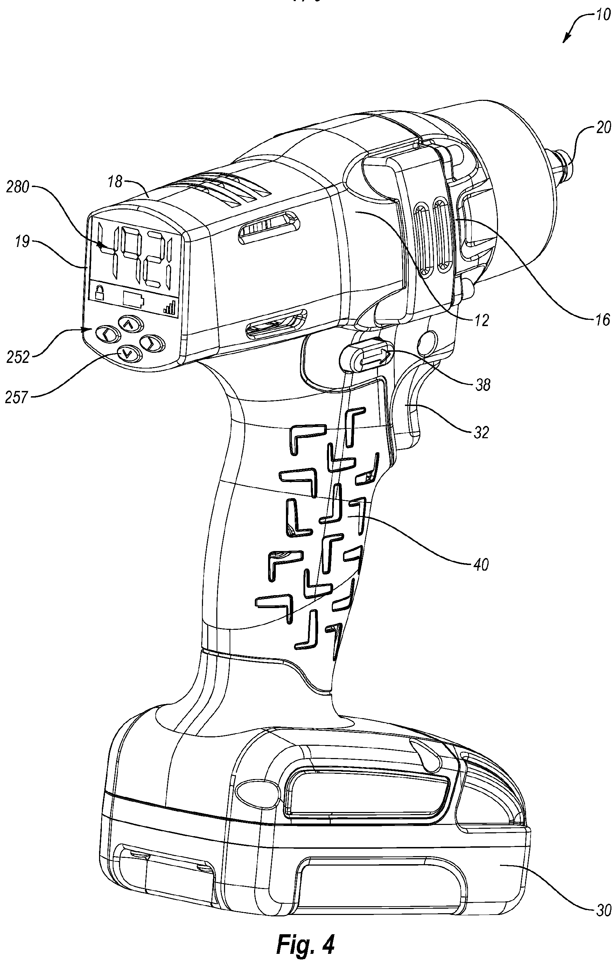

Embodiments of the power tool 10 may comprise the embodiment of the security lock-out device 250, illustratively depicted in FIG. 4. As shown, the security lock-out device 250 may be coupled to the housing 12 at the back end 18 of the housing 12. Alternatively, the security lock-out device 250 may be configured on or integrated into a rear face 19 of the back end 18 of the housing 12. The security lock-out device 250 may comprise the input device 252 and the display 280. The input device 252 may be a one or more input buttons 257 that are configured to be pressed to enter numeric values into the security lock-out device 250. As the input buttons 257 are pressed, an operator may scroll through numeric values displayed on the display 280 to reach the input parameter 256 desired to be input by the user that matches the predetermined value 266 to thereby place the power tool 10 in the operative state. On the other hand, if the operator, functioning as the external source 70, inputs the input parameter 256 to the security lock-out device 250 via the input buttons 257 and the input parameter 256 does not match the predetermined value 266, then the control unit 60 operates to place the power tool 10 in the locked-out state, wherein the power tool 10 does not operate. The predetermined value 266 may be any predetermined quantity of a series of values and/or numerals that are set in a fixed sequence in the memory 64 of the control unit 60. The predetermined value 266 may be a series or string of single-digit values, a series or string of double-digit values, or a series or string of any combination of values that can be previously stored in the memory 64 of the control unit 60. For example, the user may enter a first input parameter 256 to match the predetermined value 266, or the user may enter a series of input parameters 256 to match the predetermined value 266, as the case may be. As depicted in FIG. 4, the input buttons 257 may be directional arrows representing up, down, left, and right directions. The user may use the input buttons 257 to scroll through preselected input parameters 256 stored in the memory 64 and displayed on the display 280 until the user reaches the desired input parameters 256. The user may thereafter actuate one of the input buttons 257 (i.e., directional arrows) that is not being utilized to scroll through the input parameters 256 to register the selected input parameters 256 in the control unit 60 (i.e., if the up and down input buttons 257 are being utilized to scroll, then either the left or right input buttons 257 may be configured to operate as a function button or push button input). If necessary, the user may repeat this process until the desired number of input parameters 256 have been registered to the control unit 60 to attempt to match the predetermined value 266. Once the selected input parameters 256 have been entered, the control unit 60 compares the input parameters 256 against the predetermined value 266 and either: (1) permits the power tool 10 to function in the operative state (i.e., the motor 14 operates by drawing electric power from the power source 30) because the input parameters 256 match the predetermined value 266; or (2) places the power tool 10 in the locked-out state (i.e., the motor 14 receives no electric power from the power source 30) because the input parameters 256 did not match the predetermined value 266. In this way, access to the power tool 10 is controlled. For example, only those external sources 70 that are authorized to use the power tool 10 for its intended purpose are provided the predetermined value 266, such that only those external sources 70 that can enter the correct input parameters 256 to match the predetermined value 266 are allowed to use the power tool 10 for its intended purpose. As a result, the security lock-out device 250 of FIG. 4 serves to deter theft and unauthorized use of the power tool 10.

Further to the embodiment of the power tool 10 having the security lock-out device 250 of FIG. 4, the predetermined value 266 may be stored in the memory 64 as a sequence of directions. As such, the user may utilize the input buttons 257 to enter a sequence of directions by pushing one or more of the input buttons 257 (i.e., directional arrows) in a sequential order to attempt to match the predetermined value 266. For example, and not limited thereto, the predetermined value 266 may be "up, up, down, down, left, right, left, right." To match this illustrative predetermined value 266 and place the power tool 10 in the operational state, the user may actuate the input buttons 257 in this same pattern. Of course, it should will be understood that other patterns of directions may also be utilized as the predetermined value 266 and stored in the memory 64.

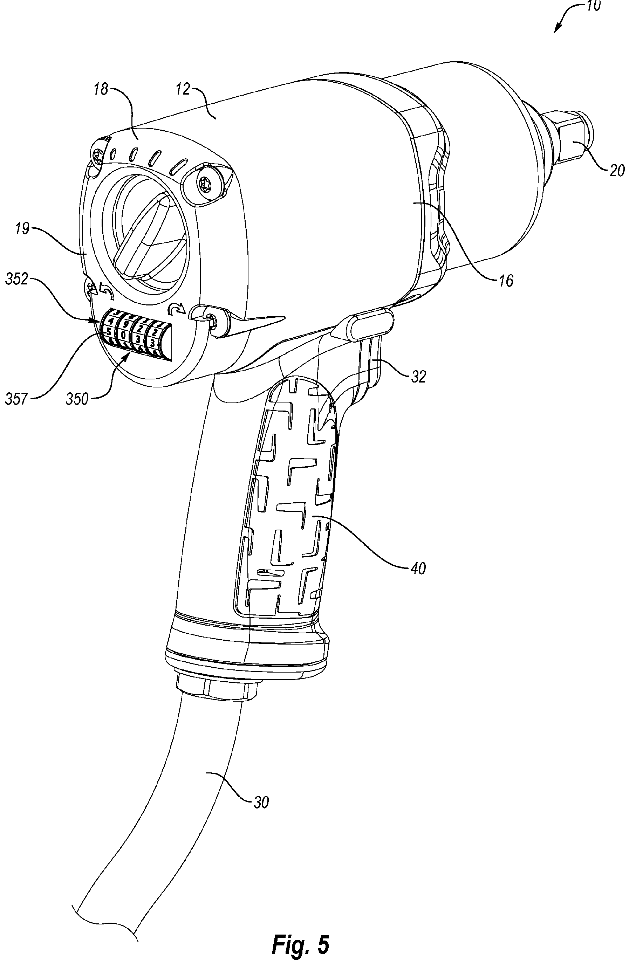

Embodiments of the power tool 10 may comprise the embodiment of the security lock-out device 350, illustratively depicted in FIG. 5. As shown, the security lock-out device 350 may be coupled to the housing 12 at the back end 18 of the housing 12. Alternatively, the security lock-out device 350 may be configured on or integrated into the back end 18 of the housing 12. The security lock-out device 350 may comprise the input device 352. The input device 352 may be a one or more input buttons 357 that are configured to be individually rotated to reveal numeric values displayed thereon to the user. As depicted in FIG. 5, the input buttons 157 may be a series of individually rotatable gears having numerals displayed on an outer surface thereof. As each of the input buttons 357 are rotated, the user may reveal the numeric value that corresponds to the input parameter 356 desired to be input by the user. As such, an operator, functioning as the external source 70, may input the input parameter 356 to the security lock-out device 350 by rotating each of the input buttons 357 to the desired input parameter 356 to attempt to match the predetermined value 366 to thereby place the power tool 10 in the operative state. However, if the operator, functioning as the external source 70, inputs the input parameter 356 to the security lock-out device 350 via the input buttons 357 and the input parameter 356 does not match the predetermined value 366, then the control unit 60 operates to place the power tool 10 in the locked-out state, wherein the power tool 10 does not operate. The predetermined value 366 may be a predetermined quantity of numerals that are set in a fixed sequence in the memory 64 of the control unit 60. The predetermined value 366 may be a series or string of single-digit values that can be previously stored in the memory 64 of the control unit 60. For example, to match the input parameters 356 with the predetermined value 366, the user may enter a first input parameter 356 by rotating the first button of the input buttons 357 to reveal a numeral that matches the first numeral of the predetermined value 366. The user may thereafter enter a second input parameter 356 by rotating the second button of the input buttons 357 to reveal a numeral that matches the second numeral of the predetermined value 366, and so on and so forth until the user has entered all of the input parameters 356 by way of the corresponding input buttons 357 in an attempt to match the predetermined value 366. As the input parameters 356 are selected via rotation of the input buttons 357, the control unit 60 compares the input parameters 356 against the predetermined value 366 and either: (1) permits the power tool 10 to function in the operative state (i.e., the motor 14 operates by drawing pneumatic power from the power source 30) because the input parameters 356 match the predetermined value 366; or (2) places the power tool 10 in the locked-out state (i.e., the motor 14 receives no pneumatic power from the power source 30) because the input parameters 356 did not match the predetermined value 366. In this way, access to the power tool 10 is controlled. For example, only those external sources 70 that are authorized to use the power tool 10 for its intended purpose are provided the predetermined value 366, such that only those external sources 70 that can enter the correct input parameters 356 to match the predetermined value 366 are allowed to use the power tool 10 for its intended purpose. As a result, the security lock-out device 350 of FIG. 5 serves to deter theft and unauthorized use of the power tool 10.

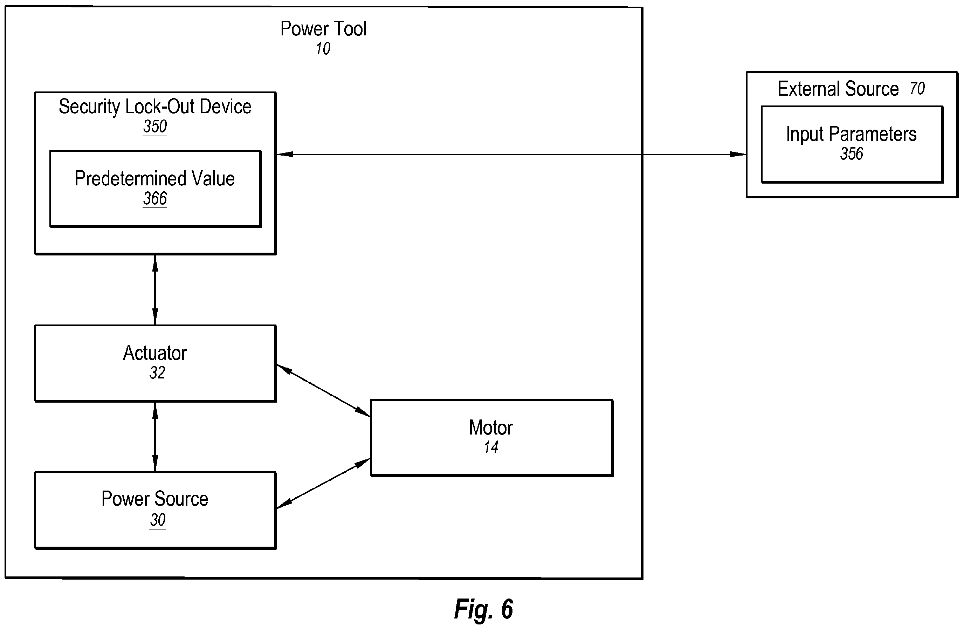

Alternatively, with further regard to embodiments of the security lock-out device 350, instead of the control unit 60 being configured to monitor the one or more input buttons 357 to determine if the input parameters 356 match the predetermined value 366, as described above, the input buttons 357 on the security lock-out device 350 may be configured to physically and/or mechanically block the actuation of the actuator 32 when the input parameters 356 do not match the predetermined value 366 that may be stored, configured, or otherwise incorporated into or within the input buttons 357 themselves or the security lock-out device 350. Without the actuator 32 being able to transition from the resting state to the engaged state, the power tool 10 will not operate, because power will not be delivered to the motor 14 from the power source 30. On the other hand, if the input buttons 357 are individually rotated such that the input parameters 356 match the predetermined value 366, the input buttons 357 or the security lock-out device 350 may be configured to permit actuation of the actuator 32, such that the power tool 10 having the security lock-out device 350 configured thereon will operate under normal operating conditions. The input buttons 357 may be a set of rotating discs each having a range of numerals on an exterior surface thereof and collectively effectuating an interior feature that physically or mechanically blocks the actuation movement of the actuator 32. In this way, access to the power tool 10 is controlled without the need for the control and processing electronics provided by the control unit 60. Instead, the mechanical operation of this particular embodiment of the security lock-out device 350 functions to provide the security desired independently and without the control unit 60. As a result, only those external sources 70 that are authorized to use the power tool 10 for its intended purpose are provided the predetermined value 366, such that only those external sources 70 that can enter the correct input parameters 356 to match the predetermined value 366 are allowed to use the power tool 10 for its intended purpose. As a result, embodiments of the security lock-out device 350 of FIG. 6 serves to deter theft and unauthorized use of the power tool 10.

The materials of construction of the power tool 10 and its various component parts, including embodiments of the security lock-out devices 50, 150, 250 and 350, may be formed of any of many different types of materials or combinations thereof that can readily be formed into shaped objects provided that the components selected are consistent with the intended operation of power tools and security lock-out devices of the type disclosed herein. For example, and not limited thereto, the components may be formed of: rubbers (synthetic and/or natural) and/or other like materials; glasses (such as fiberglass) carbon-fiber, aramid-fiber, any combination thereof, and/or other like materials; polymers such as thermoplastics (such as ABS, Fluoropolymers, Polyacetal, Polyamide; Polycarbonate, Polyethylene, Polysulfone, and/or the like), thermosets (such as Epoxy, Phenolic Resin, Polyimide, Polyurethane, Silicone, and/or the like), any combination thereof, and/or other like materials; composites and/or other like materials; metals, such as zinc, magnesium, titanium, copper, iron, steel, carbon steel, alloy steel, tool steel, stainless steel, aluminum, any combination thereof, and/or other like materials; alloys, such as aluminum alloy, titanium alloy, magnesium alloy, copper alloy, any combination thereof, and/or other like materials; any other suitable material; and/or any combination thereof.

Furthermore, the components defining the above-described power tool 10, including embodiments of the security lock-out devices 50, 150, 250 and 350, may be purchased pre-manufactured or manufactured separately and then assembled together. However, any or all of the components may be manufactured simultaneously and integrally joined with one another. Manufacture of these components separately or simultaneously may involve extrusion, pultrusion, vacuum forming, injection molding, blow molding, resin transfer molding, casting, forging, cold rolling, milling, drilling, reaming, turning, grinding, stamping, cutting, bending, welding, soldering, hardening, riveting, punching, plating, 3-D printing, and/or the like. If any of the components are manufactured separately, they may then be coupled with one another in any manner, such as with adhesive, a weld, a fastener (e.g. a bolt, a nut, a screw, a nail, a rivet, a pin, and/or the like), wiring, any combination thereof, and/or the like for example, depending on, among other considerations, the particular material forming the components. Other possible steps might include sand blasting, polishing, powder coating, zinc plating, anodizing, hard anodizing, and/or painting the components for example.

While this disclosure has been described in conjunction with the specific embodiments outlined above, it is evident that many alternatives, modifications and variations will be apparent to those skilled in the art. Accordingly, the preferred embodiments of the present disclosure as set forth above are intended to be illustrative, not limiting. Various changes may be made as required by the following claims.

## Claims

1. A power tool (10) comprising:
a rotatable tool holder (20) configured to receive a bit;
a motor (14) adapted to drive the rotation of the tool holder (20);
a housing (12) containing at least the motor (14) and a handle (40) extending therefrom configured to be gripped to manipulate the tool;
a power source (30) detachably coupled to the handle (40) and configured to deliver power to the motor (14);
an actuator (32) configured to be actuated to select powered operation of the tool;
an input device (52, 352) configured to receive an input parameter (56, 356); and
a control unit (60) configured to store a predetermined value (66, 366) and evaluate whether or not the input parameter (56, 356) matches the predetermined value (66, 366) and to permit powered operation of the tool when the input parameter (66, 366) matches the predetermined value (66, 366) and prohibit powered operation of the tool when the input parameter (66, 366) does not match the predetermined value (66, 366),
**characterized in that** the input device (52, 352) is one of
- a series of independently rotatable discs (357) each having a range of numerals on an exterior surface thereof
or
- an input device comprising a ring-shaped dial (53) and a digital display (80), the digital display (80) configured within the ring-shaped (53) dial on a rear face (19) of the housing (12), the dial (53) being adapted to rotate with respect to the digital display (80), the rotation of the dial (53) being configured to input the input parameter (56).

2. The power tool (10) of claim 1, wherein the power source (30) is pneumatic or a rechargeable battery configured to detachably couple to the handle (40) and deliver power to the motor (14).

3. The power tool (10) of claim 1 or 2, wherein the input device (52, 352) is configured on a rear face (19) in a back end (18) of the housing (12).

4. The power tool (10) of one of claims 1 to 3, wherein the dial (53) is configured to rotate in opposing directions and wherein the rotation of the dial (53) in either direction scrolls through a range of input parameters (56).

5. The power tool (10) of claims 1 to 4, wherein changing the rotation direction of the dial (53) registers to the control unit (60) the input parameter (56) displayed on the digital display (80) when the rotation direction was changed.

6. The power tool (10) of one of claims 1 to 5, wherein the dial (53) further comprises one or more raised partitions (59) thereon.

7. The power tool (10) of claim 6, wherein each of the raised partitions (59) corresponds to a successive numerical value within a range of input parameters (56).

8. The power tool (10) of one of claims 1 to 7, wherein the dial (53) may be axially moved toward the housing (12) to register in the control unit (60) the input parameter (56) displayed on the digital display (80).

9. The power tool (10) of one of claims 1 to 8, wherein the input parameter (56) is a combination of a numerical value and a direction of rotation used to arrive at the numerical value.

10. The power tool (10) of claim 9, wherein the predetermined value (66) is a series of numerical values having an assigned rotational direction associated therewith, and wherein the control unit (60) compares both the numerical value and the direction of rotation of the input parameter (56) and the predetermined value (66).

## Patentansprüche

1. Elektrowerkzeug (10), das Folgendes umfasst:
eine drehbare Werkzeugaufnahme (20), die dazu ausgelegt ist, einen Einsatz aufzunehmen;
einen Motor (14), der dazu ausgelegt ist, die Drehung der Werkzeugaufnahme (20) anzutreiben;
ein Gehäuse (12), das zumindest den Motor (14) und einen Handgriff (40) enthält, der sich davon erstreckt und dazu ausgelegt ist, ergriffen zu werden, um das Werkzeug zu manipulieren;
eine Energiequelle (30), die lösbar mit dem Handgriff (40) gekoppelt und dazu ausgelegt ist, den Motor (14) mit Energie zu versorgen;
einen Aktuator (32), der dazu ausgelegt ist, betätigt zu werden, um Motorbetrieb des Werkzeugs zu wählen;
eine Eingabevorrichtung (52, 352), die dazu ausgelegt ist, einen Eingabeparameter (56, 356) zu empfangen; und
eine Steuereinheit (60), die dazu ausgelegt ist, einen vorbestimmten Wert (66, 366) zu speichern und zu bewerten, ob der Eingabeparameter (56, 356) mit dem vorbestimmten Wert (66, 366) übereinstimmt, und Motorbetrieb des Werkzeugs zu gestatten, wenn der Eingabeparameter (66, 366) mit dem vorbestimmten Wert (66, 366) übereinstimmt, und Motorbetrieb des Werkzeugs zu sperren, wenn der Eingabeparameter (66, 366) nicht mit dem vorbestimmten Wert (66, 366) übereinstimmt,
**dadurch gekennzeichnet, dass**
die Eingabevorrichtung (52, 352) eine der folgenden ist:
- eine Reihe von unabhängig drehbaren Scheiben (357), die jeweils einen Bereich von Ziffern auf einer Außenfläche derselben haben
oder
- eine Eingabevorrichtung, die ein ringförmiges Einstellrad (53) und eine Digitalanzeige (80) umfasst, wobei die Digitalanzeige (80) innerhalb des ringförmigen Einstellrads (53) auf einer Rückseite (19) des Gehäuses (12) angeordnet ist, wobei das Einstellrad (53) dazu ausgelegt ist, sich in Bezug auf die Digitalanzeige (80) zu drehen, wobei die Drehung des Einstellrads (53) dazu ausgelegt ist, den Eingabeparameter (56) einzugeben.

2. Elektrowerkzeug (10) nach Anspruch 1,
wobei die Energiequelle (30) von pneumatischer Art oder eine wiederaufladbare Batterie ist, die dazu ausgelegt ist, lösbar mit dem Handgriff (40) gekoppelt zu werden und den Motor (14) mit Energie zu versorgen.

3. Elektrowerkzeug (10) nach Anspruch 1 oder 2,
wobei die Eingabevorrichtung (52, 352) auf einer Rückseite (19) in einem hinteren Ende (18) des Gehäuses (12) angeordnet ist.

4. Elektrowerkzeug (10) nach einem der Ansprüche 1 bis 3,
wobei das Einstellrad (53) dazu ausgelegt ist, sich in entgegengesetzte Richtungen zu drehen, und wobei die Drehung des Einstellrads (53) in beiden Richtungen durch eine Reihe von Eingabeparametern (56) scrollt.

5. Elektrowerkzeug (10) nach den Ansprüchen 1 bis 4,
wobei Ändern der Drehrichtung des Einstellrads (53) den auf der Digitalanzeige (80) angezeigten Eingabeparameter (56) in der Steuereinheit (60) registriert, wenn die Drehrichtung geändert wurde.

6. Elektrowerkzeug (10) nach einem der Ansprüche 1 bis 5,
wobei das Einstellrad (53) ferner eine oder mehrere erhöhte Partitionen (59) darauf umfasst.

7. Elektrowerkzeug (10) nach Anspruch 6,
wobei jede der erhöhten Partitionen (59) einem sukzessiven Zahlenwert innerhalb einer Reihe von Eingabeparametern (56) entspricht.

8. Elektrowerkzeug (10) nach einem der Ansprüche 1 bis 7,
wobei das Einstellrad (53) axial in Richtung des Gehäuses (12) bewegt werden kann, um den auf der Digitalanzeige (80) angezeigten Eingabeparameter (56) in der Steuereinheit (60) zu registrieren.

9. Elektrowerkzeug (10) nach einem der Ansprüche 1 bis 8,
wobei der Eingabeparameter (56) eine Kombination eines Zahlenwerts und einer Drehrichtung ist, die verwendet wird, um den Zahlenwert zu erreichen.

10. Elektrowerkzeug (10) nach Anspruch 9,
wobei der vorbestimmte Wert (66) eine Reihe von Zahlenwerten ist, die mit einer ihnen zugewiesenen Drehrichtung verbunden sind, und
wobei die Steuereinheit (60) sowohl den Zahlenwert als auch die Drehrichtung des Eingabeparameters (56) und des vorbestimmten Werts (66) vergleicht.

## Revendications

1. Outil électrique (10) comprenant :
un porte-outil rotatif (20) configuré pour recevoir un trépan ;
un moteur (14) conçu pour entraîner la rotation du porte-outil (20) ;
un boîtier (12) contenant au moins le moteur (14) et une poignée (40) s'étendant depuis ce dernier configurée pour être saisie pour manipuler l'outil ;
une source d'énergie (30) couplée de manière amovible à la poignée (40) et configurée pour délivrer de l'énergie au moteur (14) ;
un actionneur (32) configuré pour être actionné pour sélectionner un fonctionnement alimenté de l'outil ;
un dispositif d'entrée (52, 352) configuré pour recevoir un paramètre d'entrée (56, 356) ; et
une unité de commande (60) configurée pour stocker une valeur prédéterminée (66, 366) et pour évaluer si le paramètre d'entrée (56, 356) correspond, ou non, à la valeur prédéterminée (66, 366) et pour permettre un fonctionnement alimenté de l'outil lorsque le paramètre d'entrée (66, 366) correspond à la valeur prédéterminée (66, 366) et pour empêcher un fonctionnement alimenté de l'outil lorsque le paramètre d'entrée (66, 366) ne correspond pas à la valeur prédéterminée (66, 366),
**caractérisé en ce que** le dispositif d'entrée (52, 352) est
- soit une série de disques indépendamment rotatifs (357) ayant chacun une plage de chiffres sur une surface extérieure de ces derniers,
- soit un dispositif d'entrée comprenant un cadran en forme de bague (53) et un dispositif d'affichage numérique (80), le dispositif d'affichage numérique (80) étant configuré à l'intérieur du cadran en forme de bague (53) sur une face arrière (19) du boîtier (12), le cadran (53) étant conçu pour tourner par rapport au dispositif d'affichage numérique (80), la rotation du cadran (53) étant configurée pour entrer le paramètre d'entrée (56).

2. Outil électrique (10) selon la revendication 1, dans lequel la source d'énergie (30) est pneumatique ou une batterie rechargeable configurée pour être couplée de manière amovible à la poignée (40) et pour délivrer de l'énergie au moteur (14).

3. Outil électrique (10) selon la revendication 1 ou 2, dans lequel le dispositif d'entrée (52, 352) est configuré sur une face arrière (19) dans une extrémité dorsale (18) du boîtier (12).

4. Outil électrique (10) selon l'une des revendications 1 à 3, dans lequel le cadran (53) est configuré pour tourner dans des directions opposées et dans lequel la rotation du cadran (53) dans l'une ou l'autre direction fait défiler une gamme de paramètres d'entrée (56).

5. Outil électrique (10) selon les revendications 1 à 4, dans lequel le changement de la direction de rotation du cadran (53) enregistre à l'unité de commande (60) le paramètre d'entrée (56) affiché sur le dispositif d'affichage numérique (80) lorsque la direction de rotation a été changée.

6. Outil électrique (10) selon l'une des revendications 1 à 5, dans lequel le cadran (53) comprend en outre une ou plusieurs cloisons surélevées (59) sur ce dernier.

7. Outil électrique (10) selon la revendication 6, dans lequel chacune des cloisons surélevées (59) correspond à une valeur numérique successive dans une gamme de paramètres d'entrée (56).

8. Outil électrique (10) selon l'une des revendications 1 à 7, dans lequel le cadran (53) peut être déplacé axialement vers le boîtier (12) pour enregistrer, dans l'unité de commande (60), le paramètre d'entrée (56) affiché sur le dispositif d'affichage numérique (80).

9. Outil électrique (10) selon l'une des revendications 1 à 8, dans lequel le paramètre d'entrée (56) est une combinaison d'une valeur numérique et d'une direction de rotation utilisée pour arriver à la valeur numérique.

10. Outil électrique (10) selon la revendication 9, dans lequel la valeur prédéterminée (66) est une série de valeurs numériques ayant une direction de rotation attribuée associée à ces dernières, et dans lequel l'unité de commande (60) compare à la fois la valeur numérique et la direction de rotation du paramètre d'entrée (56) et la valeur prédéterminée (66).
